# FASCICULE DE BREVET EUROPEEN

(11) **EP 2 364 078 B1**
(45) Date de publication et mention de la délivrance du brevet: **24.04.2013**
(21) Numéro de dépôt: 09744768.4
(22) Date de dépôt: 23.10.2009
(51) Int. Cl.: A01G 9/10

(54) **PROCÉDÉ ET DISPOSITIF POUR LA FABRICATION DE SUPPORTS DE CULTURE HORS SOL**
VERFAHREN UND VORRICHTUNG ZUR HERSTELLUNG VON STÜTZEN FÜR ERDLOSE KULTIVIERUNG
METHOD AND DEVICE FOR MANUFACTURING SUPPORTS FOR SOILLESS CULTIVATION

(30) Priorité: 25.10.2008 FR 0857261
(43) Date de publication de la demande: 14.09.2011
(73) Titulaire: Guillemain, Jean-Sylvain, 18120 Lury sur Arnon (FR); Bugeon (épouse) Guillemain, Françoise, 18120 Lury Sur Arnon (FR)
(72) Inventeur: Guillemain, Jean-Sylvain, 18120 Lury sur Arnon (FR); Bugeon (épouse) Guillemain, Françoise, 18120 Lury Sur Arnon (FR); Mitton, Bernard, 18120 Lury Sur Arnon (FR)
(74) Mandataire: Poncet, Jean-François
(86) Numéro de dépôt international: PCT/IB2009/054698
(87) Numéro de publication internationale: WO 2010/046882

(56) Documents cités:
- WO-A1-96/25844
- FR-A1- 2 610 604
- FR-A1- 2 663 627
- GB-A- 2 069 973
- NL-C2- 1 016 938
- US-A- 5 088 231

## Description

### DOMAINE TECHNIQUE DE L'INVENTION

La présente invention concerne la réalisation de supports de culture en forme de sacs que l'on peut utiliser pour la culture hors sol.

Les supports modulaires de culture en forme de sacs sont emplis d'un substrat de culture pouvant être enrichi par des substances nutritives. Les sacs sont ainsi posés les uns à côté des autres, pour constituer un tapis sur lequel les plantes sont susceptibles de se développer.

Les supports de culture, après plantation et fleurissement en serre, sont mis en place soit individuellement dans des jardinières, soit juxtaposés au sol pour former des motifs décoratifs plus grands et plus élaborés sur le site à fleurir.

On connaît notamment des supports modulaires de culture en forme de sacs tels que décrits dans le document WO 97/04641 A. Le sac comprend une paroi inférieure et une paroi supérieure solidarisées l'une à l'autre. La paroi inférieure est en un matériau perméable à l'air et à l'eau et retenant le substrat de culture lors des manipulations et du transport. La paroi supérieure est solidarisée à la paroi inférieure selon le pourtour du sac, et est formée d'au moins deux feuilles superposées comprenant une première feuille en un matériau à grosses mailles susceptible d'assurer une bonne tenue d'une couche de décor ultérieurement déposée sur le support, et une seconde feuille en un matériau rapidement biodégradable sous l'action de l'eau et adaptée pour retenir temporairement le substrat de culture lors des manipulations et du transport. Les sacs peuvent être en un seul compartiment, ou, de préférence, en plusieurs compartiments longitudinaux séparés par des lignes de solidarisation longitudinales intermédiaires. Les supports de culture sont réalisés à partir de trois parois d'enveloppe. La quantité de matière utilisée pour fabriquer les supports de culture est importante.

Les sacs ont généralement une forme rectangulaire. Lors de leur fabrication, les parois supérieure et inférieure des sacs sont solidarisées selon deux côtés longitudinaux et un côté transversal, puis les compartiments intermédiaires sont remplis par introduction du substrat de culture par le second côté transversal ouvert, et l'on ferme ensuite ce second côté transversal par solidarisation de ses bords l'un à l'autre pour empêcher la sortie du substrat de culture. Cette fabrication peut être effectuée manuellement, et requiert notamment une opération délicate et fastidieuse d'introduction du substrat de culture dans le ou les compartiments du sac.

Du document WO 01/50841 A1, on connaît la mécanisation de l'étape d'introduction du substrat de culture dans le ou les compartiments du sac par le second côté transversal ouvert. Cette étape d'introduction du substrat de culture reste délicate, du fait de la structure et du comportement essentiellement variables du substrat de culture. Et le dispositif mécanique ne permet pas la réalisation de formes diverses de supports de culture.

Le document US 5,088,231 A décrit un dispositif et un procédé automatisé pour la micropropagation et la culture in vitro d'une matière organique. Le dispositif produit des petites alvéoles par soufflage et soudure de deux bandes parallèles de matière plastique, en laissant une portion périphérique non soudée par laquelle on introduit un substrat de culture avant de souder la portion périphérique pour fermer l'alvéole. Un tel procédé n'est pas adapté à la fabrication de supports de culture hors sol, dont les dimensions sont nettement plus grandes que des alvéoles de culture in vitro.

Le document FR 2 663 627 A1 décrit un procédé automatisé dans lequel un substrat de culture est comprimé puis découpé en pavés. On enferme ensuite chaque pavé en déployant autour de lui une enveloppe souple que l'on soude sur elle-même. Ce procédé nécessite une forte compression préalable du substrat, pour éviter sa désagrégation pendant l'enveloppement.

Le document GB 2 069 973 A décrit un support de culture comprenant une plaque rigide en forme de bac pour faciliter son transport.

Le document FR 2 610 604 A1 enseigne de préformer une feuille multicouche dans un moule pour lui donner une forme tridimensionnelle convenable pour constituer une couverture esthétique du fond et des parois latérale d'un conteneur de fleurs et plantes.

### EXPOSE DE L'INVENTION

Le problème proposé par la présente invention est de prévoir un procédé pour faciliter davantage la fabrication de supports de plantation de formes géométriques et de dimensions variées.

Seion un second aspect, l'invention se propose de concevoir un dispositif pour faciliter la fabrication de supports de culture hors sol.

En particulier, l'invention vise à éviter les inconvénients résultant de la structure et du comportement fortement variables du substrat de culture lors de l'étape de remplissage des sacs, qui provoquent des irrégularités et des défauts de remplissage.

De préférence, le procédé et le dispositif doivent être automatisables.

Pour atteindre ces buts ainsi que d'autres, l'invention propose un procédé de fabrication de supports de culture hors sol, qui comprend les étapes suivantes :
- prévoir une première portion d'enveloppe souple,
- mettre et tenir en forme la première portion d'enveloppe souple pour former au moins une poche présentant une face d'ouverture, l'étape de mise en forme de la première portion d'enveloppe souple étant réalisée avec aspiration et/ou pressage de la première portion d'enveloppe souple dans un moule,
- introduire par la face d'ouverture un substrat de culture dans la poche tenue par le moule,
- fermer la face d'ouverture de ladite poche avec une seconde portion d'enveloppe souple, pour former un support de culture contenant le substrat de culture.

Ce procédé est avantageux notamment en ce qu'il comprend un nombre moindre d'étapes par rapport aux procédés connus. De plus, toutes ces étapes sont automatisables, et simples à mettre en oeuvre.

L'utilisation d'une première portion d'enveloppe qui est souple facilite sa mise en forme pour constituer une poche apte à recevoir efficacement le substrat de culture.

Dans la description qui suit, et dans les revendications, le terme poche désigne toute forme d'alvéole ouverte dans laquelle un substrat de culture fluide peut aisément être introduit. Dans le cas d'une poche sensiblement parallélépipédique rectangle, la face d'ouverture formera de préférence l'une des grandes faces du parallélépipède.

Pour la première portion d'enveloppe souple, on peut utiliser un matériau en bande textile ou non tissé, de préférence biodégradable, avantageusement compostable. On pourra par exemple utiliser un produit distribué par la société HORTAFLEX de la gamme HORTAFLEX ® 200, ou un produit distribué par la société CULTISOL de la gamme BIOFILIA ®. Ces produits offrent l'avantage d'être biodégradables, compostables, et de convenir parfaitement à la culture hors sol.

L'étape de mise en forme permet de plaquer efficacement la première portion d'enveloppe souple contre la paroi intérieure de l'alvéole. La forme de la poche ouverte ainsi obtenue est facilement reproductible. Le pressage peut remplacer ou compléter l'aspiration pour assurer ou améliorer le plaquage.

Le maintien de la poche par le moule pendant l'étape d'introduction du substrat de culture facilite considérablement l'introduction et la répartition du substrat de culture.

Selon un premier mode de réalisation, on peut avantageusement prévoir que les première et seconde portions d'enveloppe souple sont réalisées à partir d'un seul lé que l'on replie sur lui-même.

Ce mode de réalisation est simple car il ne nécessite pas de manipuler et d'assembler plusieurs pièces de matière, l'approvisionnement en matière est simplifié car une seule matière est nécessaire.

Ce procédé permet de réaliser le conteneur du substrat de culture à partir d'une seule pièce de matière. La quantité de matière utilisée est moindre. L'utilisation d'une seule pièce de matière facilite la réalisation de la poche ouverte, en ce sens qu'elle ne nécessite pas de manipuler et d'assembler de façon précise plusieurs pièces de matière lors de cette réalisation.

De plus, la poche faite d'une seule pièce de matière ne présente aucune zone de faiblesse, contrairement au cas d'une poche ouverte réalisée par l'assemblage de plusieurs pièces de matière. Ainsi, on peut introduire le substrat de culture dans la poche par sa face ouverte sans craindre que la poche ouverte ne se rompe pendant la fabrication du support de culture hors sol.

Selon un second mode de réalisation, on peut avantageusement prévoir que les première et seconde portions d'enveloppe souple sont réalisées à partir de deux les respectifs distincts.

Ce mode de réalisation permet de choisir une seconde portion d'enveloppe souple qui soit éventuellement d'une matière différente de celle de la première portion d'enveloppe souple. Ainsi, on peut adapter la constitution de l'enveloppe souple à la culture que l'on désire faire.

On peut prévoir que l'étape de fermeture est réalisée par soudure, par collage ou par couture, avantageusement par soudure à ultrasons dans le cas d'une enveloppe souple en matériau thermofusible.

Ces méthodes de fermeture de la poche pour former le support de culture sont rapides et simples à mettre en oeuvre. Elles permettent de fermer la poche de façon suffisamment fiable pour que la poche ne libère pas du substrat de culture qu'elle contient iors de sa manipulation et/ou de sa mise en place.

Avantageusement, on peut prévoir que l'étape d'introduction du substrat de culture dans la poche est complétée par une ou plusieurs étapes de compression du substrat de culture dans la poche.

On optimise ainsi la quantité de substrat contenue dans le support de culture.

On peut avantageusement prévoir que l'étape de fermeture est complétée par une étape de découpage périphérique du support de culture.

Ainsi, le support de culture ne comprendra pas de matière superflue.

Selon un second aspect, l'invention propose un dispositif pour la fabrication de supports de culture hors sol par la mise en oeuvre d'un procédé selon le premier aspect de l'invention, comprenant :
- au moins un moule présentant au moins une alvéole avec une paroi périphérique, un fond et une face d'ouverture,
- des moyens de support de moule, aptes à recevoir et tenir le moule dans une position de travail prédéterminée,
- des moyens d'acheminement pour fournir une première portion d'enveloppe souple à proximité de la position de travail prédéterminée,
- des moyens de pincement de l'extrémité de première portion d'enveloppe souple,
- des moyens de mise en forme pour forcer la première portion d'enveloppe souple dans l'alvéole et former une poche ayant une face d'ouverture,
- des moyens de distribution pour introduire par la face d'ouverture un substrat de culture dans la poche tenue par l'alvéole du moule,
- des moyens de fermeture pour fermer la face d'ouverture de ladite poche avec une seconde portion d'enveloppe souple, pour former un support de culture contenant le substrat de culture.

Un tel dispositif met en oeuvre le procédé selon le premier aspect de l'invention. Il offre l'avantage de réaliser, dans une machine unique, simple et automatisable, toutes les étapes du procédé ci-dessus. Ces étapes peuvent toutes être réalisées de façon automatique. Ceci a pour conséquence de diminuer le temps de fabrication des supports de culture et ainsi de réduire leurs coûts de fabrication. De plus, le nombre des manipulations réalisées par un opérateur est fortement réduit.

L'utilisation d'un moule pour donner une forme au support de culture permet d'assurer une bonne reproductibilité des formes, et d'offrir la possibilité de réaliser des formes diverses et des dimensions variées, par un simple changement de moule.

Compte tenu des faibles contraintes auxquelles le moule est soumis, il n'est pas nécessaire que le moule soit réalisé dans un matériau très technique. Ainsi, il peut être réalisé simplement à partir de tôles embouties, ou de bois.

Comme l'enveloppe est souple, elle s'adapte à des moules de formes diverses.

De façon avantageuse, on peut prévoir que les moyens de mise en forme comprennent des moyens d'aspiration pour aspirer la première portion d'enveloppe souple dans l'alvéole.

Les moyens d'aspiration sont efficaces et faciles à mettre en oeuvre. L'enveloppe est ainsi plaquée de façon fiable et efficace contre la paroi intérieure de l'alvéole.

Avantageusement, on peut prévoir que les moyens de mise en forme comprennent des moyens de pressage de forme complémentaire de celle de l'alvéole et aptes à presser la première portion d'enveloppe souple contre la paroi intérieure de l'alvéole.

On améliore ainsi le plaquage de l'enveloppe souple contre la paroi intérieure de l'alvéole.

De façon avantageuse, on peut prévoir que les moyens de distribution comprennent :
- une réserve mobile, apte à être déplacée entre une position de rechargement et une position de distribution, et comprenant un fond à moyens d'ouverture et apte à s'engager contre la face d'ouverture de la première portion d'enveloppe souple,
- un dispositif applicateur de forme superposable à celle du moule.

Ainsi, la réserve mobile peut comprendre précisément la quantité de substrat de culture devant être introduite dans la poche ouverte. La taille du réservoir de la réserve mobile est suffisamment grande pour contenir le substrat de culture devant être introduit dans la poche de plus grande taille.

Le dispositif applicateur guide le substrat de culture dans l'alvéole du moule.

On peut avantageusement prévoir que :
- les moyens de support de moule déplacent le moule entre une position inférieure d'attente et une position supérieure de travail,
- la réserve mobile est déplacée, par exemple horizontalement, entre la position de rechargement et la position de distribution,
- en position de distribution, la réserve mobile est en communication avec le moule.

Les déplacements sont prévus et réduits au minimum pour diminuer et optimiser le temps de fabrication des supports de culture.

Avantageusement, on peut prévoir que le moule comprend des trottoirs périphériques et les moyens de fermeture comprennent des moyens d'assemblage des première et seconde portions d'enveloppe souple.

Le dispositif applicateur empêche le dépôt de substrat de culture sur le trottoir périphérique, dépôt susceptible de s'opposer à une bonne fermeture de l'enveloppe souple et à une bonne qualité d'assemblage du support de culture.

Les trottoirs facilitent l'assemblage des première et seconde portions d'enveloppe souple en ce qu'ils réalisent une surface d'appui de largeur substantielle, pouvant présenter une certaine rigidité, et sur laquelle deux couches d'enveloppe souple peuvent être appliquées lors des opérations d'assemblage. Les moyens d'assemblage peuvent venir en appui sur ces trottoirs. La qualité de l'assemblage est améliorée.

On peut avantageusement prévoir que le dispositif applicateur comprend en outre des séparateurs.

Les séparateurs empêchent aussi le dépôt de substrat de culture sur les zones de séparation des alvéoles du moule, dépôt susceptible de diminuer ensuite la qualité de l'assemblage du support de culture.

De façon avantageuse, on peut prévoir que le dispositif comprend des moyens de découpage périphérique du support de culture.

Ainsi, on enlève le surplus de la matière souple qui constitue le support de culture. Le support de culture présente ainsi des bordures nettes.

De façon avantageuse, on peut prévoir que les moyens de découpage périphérique du support de culture sont synchronisés avec les moyens de mise en forme et/ou avec les moyens de fermeture.

Ainsi, simultanément, la poche est fermée et le surplus de matière est enlevé. Le découpage de matière superflue ne rallonge ainsi pas le temps de fabrication des supports de culture.

### DESCRIPTION SOMMAIRE DES DESSINS

D'autres objets, caractéristiques et avantages de la présente invention ressortiront de la description suivante de modes de réalisation particuliers, faite en relation avec les figures jointes, parmi lesquelles :
- la figure 1 est une vue schématique des étapes de la fabrication de supports de culture selon un premier mode de réalisation de l'invention ;
- la figure 2 est une vue schématique des étapes de la fabrication de supports de culture selon un second mode de réalisation de l'invention ;
- les figures 3, 4 et 5 sont des vues schématiques de dessus de moules selon trois modes de réalisation ;
- la figure 6 est une vue schématique de côté du dispositif pour la fabrication de supports de culture selon un mode de réalisation de l'invention ;
- la figure 7 est une vue en perspective à plus grande échelle du moule et du support de moule de la figure 6 ;
- la figure 8 est une vue en perspective du support de moule de la figure 7 avec les bras d'extraction déployés ;
- la figure 9 est une vue de face à plus grande échelle de moyens de pressage selon un mode de réalisation de l'invention ;
- la figure 10 est une vue en perspective d'un chariot de soudage selon un mode de réalisation de la présente invention ;
- la figure 11 est une vue en coupe longitudinale des moyens de distribution de la figure 6 en position de rechargement ; et
- la figure 12 est une vue schématique d'un mode de réalisation d'un support de culture selon un mode de réalisation de l'invention.

### DESCRIPTION DES MODES DE REALISATION PREFERES

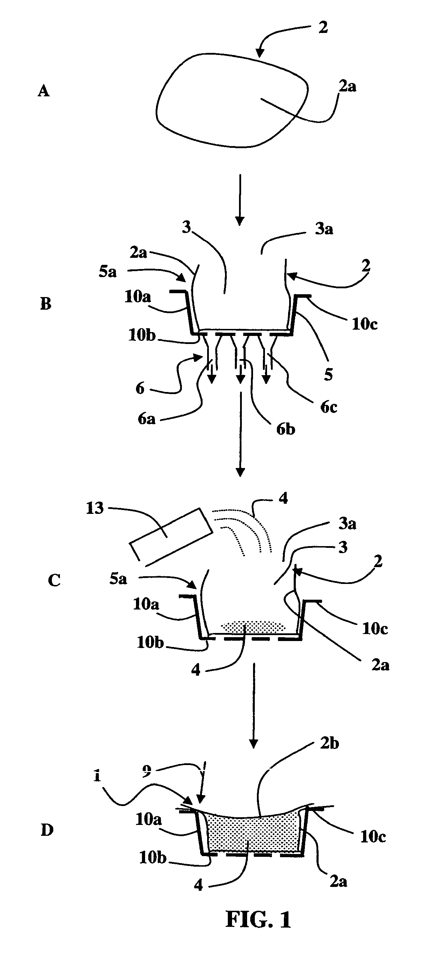

La figure 1 illustre schématiquement quatre étapes (A à D) de la fabrication de supports de culture 1 selon un premier mode de réalisation.

Lors de l'étape A, on prend une enveloppe souple 2 présentant une première portion 2a d'enveloppe souple 2. Cette enveloppe souple 2 est en un matériau souple qui est choisi parmi ceux pouvant convenir aux cultures hors sol. Ce matériau souple sera avantageusement biodégradable et compostable.

Lors de l'étape B, pour la mettre en forme, la première portion 2a d'enveloppe souple est positionnée dans un moule 5. Le moule 5 représenté comprend, par simplification, une unique alvéole 5a, une paroi périphérique 10a, un fond 10b et des trottoirs périphériques 10c. La première portion 2a d'enveloppe souple 2 est plaquée pour être mise en contact avec la paroi intérieure de l'alvéole 5a et former une poche 3 ouverte avec une face d'ouverture 3a. Pour améliorer le plaquage de la première portion 2a d'enveloppe souple, on peut avantageusement utiliser des moyens d'aspiration 6 qui aspirent l'air présent entre la face externe de la poche 3 et la face intérieure de l'alvéole 5a par les canalisations 6a-6c.

La fabrication (non représentée) de supports de culture peut plus avantageusement être réalisée dans un moule comprenant plusieurs alvéoles, pour produire soit des supports de culture à plusieurs compartiments, soit une pluralité de supports de culture détachables ou détachés.

Lors de l'étape C, on verse du substrat de culture 4, contenu dans un réservoir 19, dans la poche 3 ouverte par la face d'ouverture 3a. Le substrat de culture 4 remplit la poche 3 ouverte, qui est encore tenue par l'alvéole 5a du moule 5.

Dans le mode de réalisation illustré sur cette figure, lors de l'étape D, la poche 3 restant engagée et tenue dans l'alvéole 5a du moule 5, on positionne une seconde portion 2b d'enveloppe souple 2 au-dessus de l'ouverture 3a de la poche 3. Ensuite, on ferme la poche 3, grâce à des moyens de fermeture de type collage, soudure ou couture. Ces moyens de fermeture peuvent prendre appui sur les trottoirs 10c du moule 5, pour améliorer l'assemblage des première 2a et seconde 2b portions d'enveloppe souple 2. On obtient ainsi un support de culture 1.

Des moyens de découpage 9 peuvent être mis en oeuvre pour ôter les parties inutiles de matière souple si celles-ci n'ont pas à remplir le rôle de bavette du support de culture 1. Ainsi on obtient un support de culture fini.

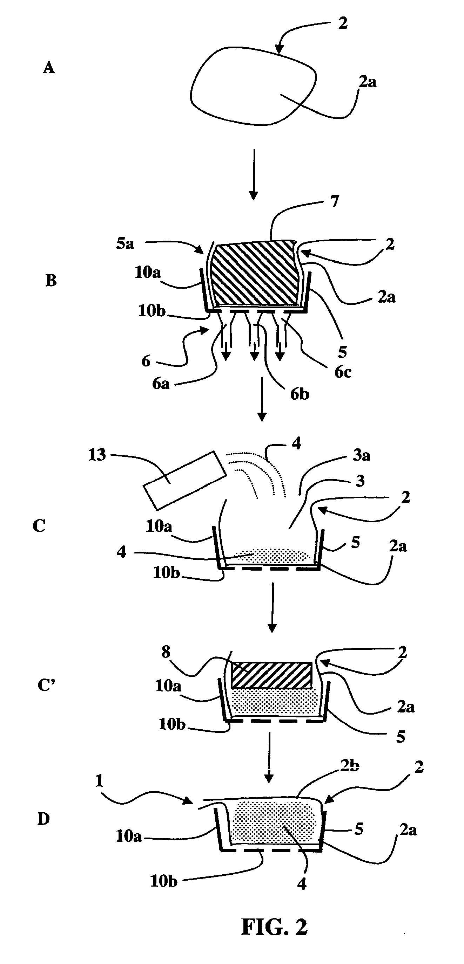

La figure 2 illustre un second mode de réalisation de la fabrication de supports de culture. Cette figure illustre cinq étapes A, B, C, C' et D, les étapes A, B, C et D étant les mêmes que dans le mode de réalisation de la figure 1, sauf en ce qui concerne l'étape B dans laquelle on ajoute l'action de moyens de pressage 7.

Les mêmes moyens essentiels sont repérés par les mêmes références numériques que sur la figure 1. Les principales différences résident dans le moule 5 qui ne comprend qu'un trottoir partiel, et dans une étape C' insérée après l'étape C et avant l'étape D, au cours de laquelle on comprime avec des moyens de compression 8 le substrat de culture 4 contenu dans la poche 3. L'étape D est différente dans ce mode de réalisation, en ce que c'est la même enveloppe souple 2 qui est repliée sur elle-même pour former la seconde portion 2b d'enveloppe souple et refermer la poche en formant ainsi le support de culture 1.

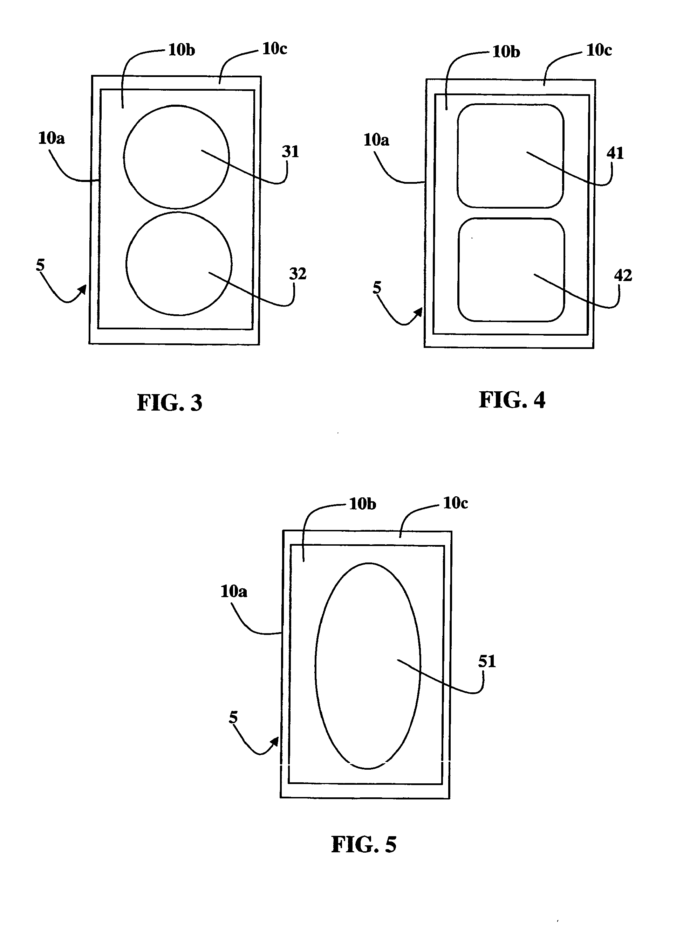

Les figures 3, 4 et 5 illustrent trois exemples de formes de moule. Chaque figure illustre un moule 5 comprenant une paroi périphérique 10a, un fond 10b et un trottoir 10c.

Le moule de la figure 3 comprend deux alvéoles circulaires 31 et 32. Le moule de la figure 4 comprend deux alvéoles 41 et 42 de forme carrée. Le moule de la figure 5 comprend une unique alvéole 51 de forme ovale.

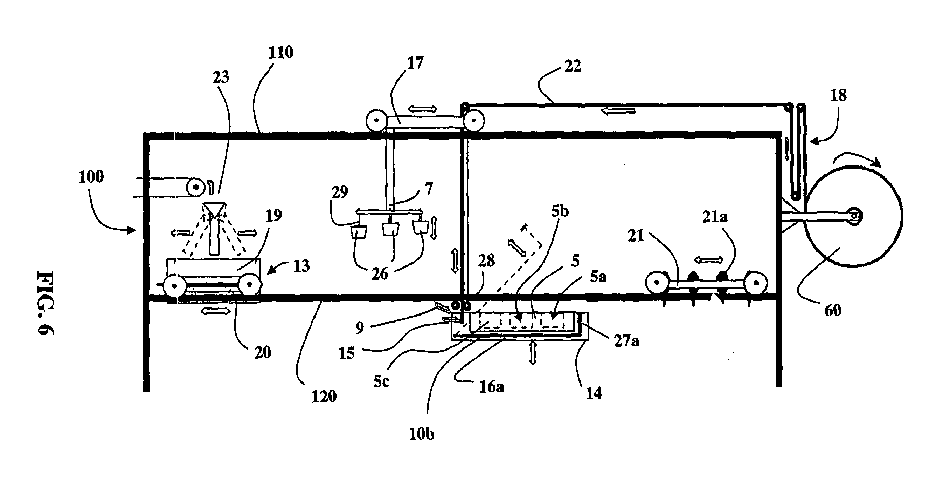

La figure 6 illustre un dispositif pour la fabrication de supports de culture. Le dispositif comprend un châssis 100 comportant un chemin de roulement supérieur 110 et un chemin de roulement inférieur 120, sur lesquels se déplacent des chariots 13, 17 et 21 dont les fonctions respectives sont décrites ci-après. Le dispositif de fabrication est illustré ici avec un moule 5 comportant trois alvéoles rectangulaires 5a, 5b et 5c.

Le châssis 100 supporte en une extrémité un rouleau 60 de matériau souple en bande 22 dont la laize correspond à la longueur du support de culture que l'on veut obtenir, ceci pour avoir les déplacements les plus courts et par conséquent la cadence de fabrication la plus élevée. Le dispositif comprend également un dispositif dérouleur-enrouleur 18 à proximité du rouleau 60.

Un premier chariot est un chariot de distribution 13 qui peut être déplacé sur le chemin de roulement inférieur 120, entre une position de chargement (représentée sur la figure) dans laquelle il est placé sous un poste de chargement 23, et une position de distribution dans laquelle il est en regard d'un support de moule 14.

Le second chariot est un chariot de déroulement 17 qui peut être déplacé sur le chemin de roulement supérieur 110.

Le troisième chariot est un chariot de soudage 21 qui peut être déplacé sur le chemin de roulement inférieur 120. Le chariot de soudage 21 comporte des têtes de soudage 21 a.

Le dispositif illustré sur la figure 6 comprend également des moyens de pressage 7, liés au chariot de déroulement 17, et aptes à être déplacés verticalement vers et à l'écart du support de moule 14.

Le chariot de déroulement 17 assure le déroulement et le positionnement au-dessus du moule 5 du lé du matériau souple en bande 22 depuis le rouleau 60. Pour éviter au lé de se rompre lors des accélérations ou de faseyer lors des relâchements, le lé de matériau souple en bande 22 passe par un dispositif automatique dérouleur-enrouleur 18 qui maintient en tension constante le lé du matériau souple en bande 22.

Le support de moule 14 comprend un moule 5 avec trois alvéoles 5a, 5b et 5c.

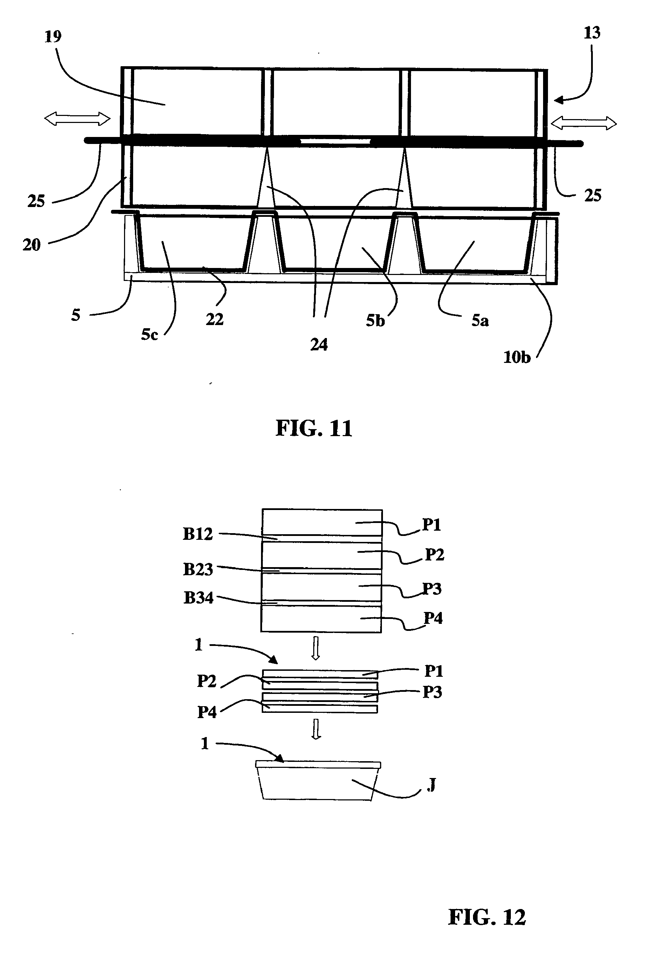

Le chariot de distribution 13 comprend un réservoir de substrat de culture 19. Le fond de ce réservoir de substrat de culture 19 comprend des trappes 25 mobiles. L'ouverture de ces trappes 25 (figure 11) mobiles provoque le transfert du substrat de culture 4 depuis le réservoir de substrat de culture 19 vers les alvéoles 5a, 5b et 5c du moule 5. Un mode de réalisation équivalent consisterait à ne prévoir qu'une seule trappe dans le fond du réservoir de substrat de culture 19.

Les moyens de distribution 13 sont composés de trois parties, comme on le voit mieux sur la figure 11 :
- en partie supérieure, le réservoir de substrat de culture 19 qui contient la dose de substrat de culture nécessaire pour remplir les alvéoles 5a, 5b et 5c du moule 5,
- en partie inférieure, un dispositif applicateur 20 dont la dimension et la forme se superposent exactement à celle du moule 5, avec des séparateurs 24 à section triangulaire qui guident le substrat de culture 4 vers les alvéoles 5a, 5b et 5c du moule 5, en évitant toute salissure des parties périphériques de matériau souple en bande 22 qu'il faut ensuite assembler pour fermer le support de culture 1.

Le dispositif applicateur 20 est amovible et peut être désolidarisé du réservoir de substrat de culture 19. Lorsque l'on change le moule 5, on peut ainsi changer le dispositif applicateur 20 et choisir un tel dispositif qui est adapté à la forme du moule 5 utilisé (par exemple au nombre et à la forme des alvéoles).

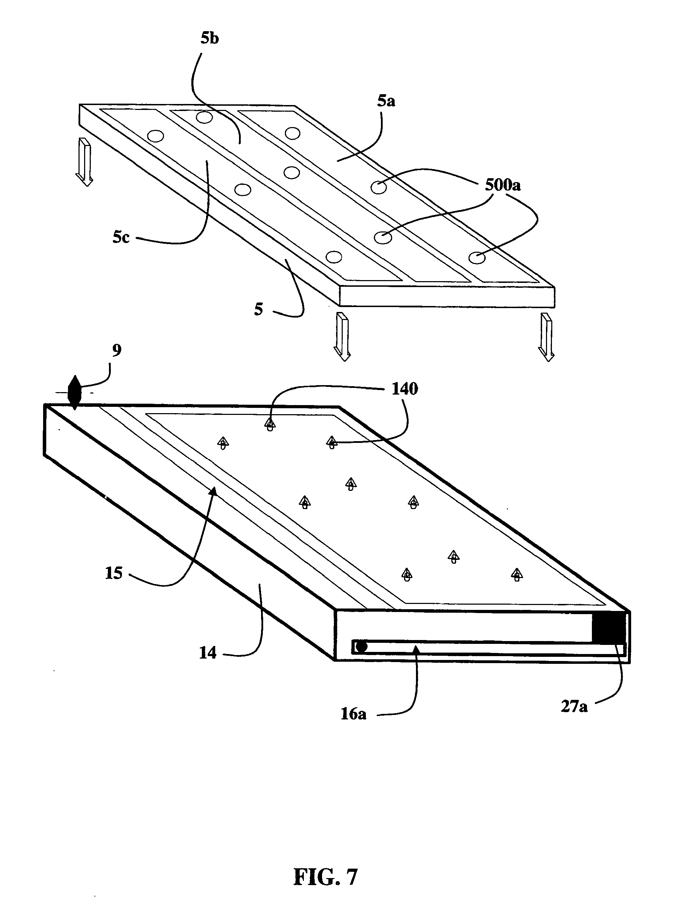

La figure 7 illustre de façon plus détaillée un mode de réalisation de moule 5 et de support de moule 14. Le fond 10b (figure 11) du moule 5 peut comporter des lumières 500a pour laisser passer des couteaux de prédécoupe 140 situés au fond du support de moule 14. Ces couteaux de prédécoupe 140 pratiquent des petites incisions en forme de croix dans le lé du matériau souple en bande 22 pour repérer les emplacements destinés à recevoir les plants et faciliter, au moment de la plantation, la mise en place de mini-mottes dans le support de culture.

Le support de moule 14 est fixe en translation, et il peut monter et descendre selon une course de quelques centimètres nécessaire pour :
- plaquer le lé du matériau souple en bande contre le chariot de distribution 13 et assurer ainsi une étanchéité au moment de la distribution du substrat de culture 4 dans les poches 3 (figures 1 et 2),
- permettre la pénétration des couteaux de prédécoupe 140 dans le lé du matériau souple en bande 22 en conjonction avec la descente de poinçons 26 des moyens de pressage 7,
- ou encore assurer une pression suffisante sur les têtes de soudage 21 pendant l'assemblage.

Les moyens de pressage 7 sont utilisés pour plaquer le lé du matériau souple en bande 22 au fond des alvéoles 5a, 5b et 5c du moule 5. Cette opération peut éventuellement être associée à une aspiration dans le moule 5 pour favoriser la mise en place du matériau souple en bande 22 au fond. L'aspiration dont il est question ici est similaire à celle explicitée dans la description des figures 1 et 2.

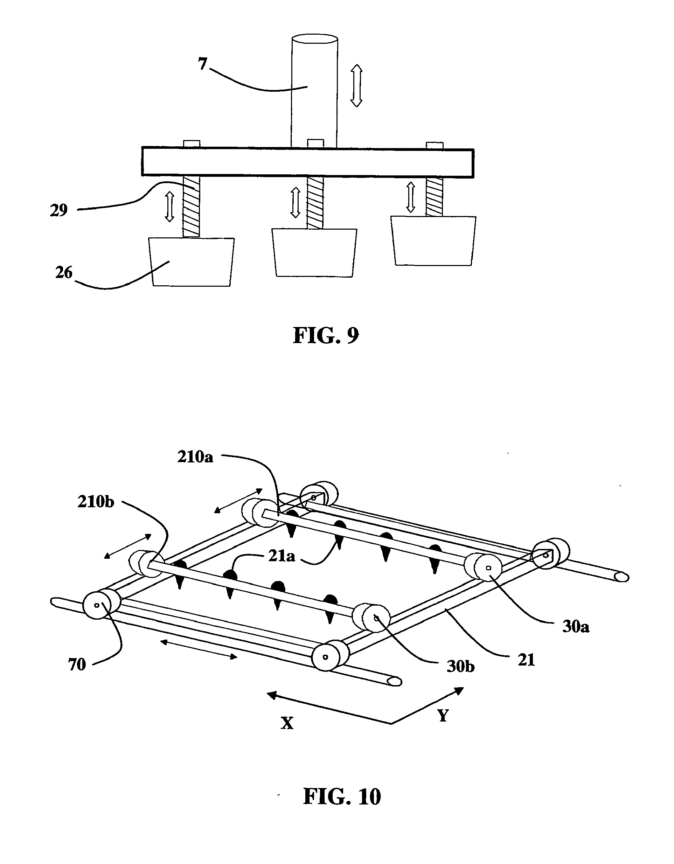

Les moyens de pressage 7 peuvent comporter un ou plusieurs poinçons 26 en corrélation avec le moule 5 utilisé. Afin de faciliter la mise en place du matériau souple en bande 22 et éviter son déchirement, lorsque le moule 5 comporte plusieurs alvéoles, les poinçons 26 sont montés sur ressorts 29 et sont décalés au repos verticalement (figure 9) pour des interventions successives de telle sorte qu'ils poussent le matériau souple en bande progressivement au fond des alvéoles 5a, 5b et 5c du moule 5 les unes après ies autres avec un décalage dans le temps. Les poinçons 26 sont des formes pleines complémentaires des alvéoles 5a, 5b et 5c du moule 5.

Les moyens de pressage 7 sont aussi utilisés pour assurer, après remplissage et avant fermeture, un léger tassement du substrat de culture 4 dans les alvéoles 5a, 5b et 5c du moule 5, et en même temps faire pénétrer les couteaux de prédécoupe 140 dans le lé du matériau souple en bande 22.

On va maintenant expliquer le fonctionnement de ce dispositif.

Le moule 5 est mis en place dans l'évidement du support de moule 14. Le dessus du moule 5 affleure les bords supérieurs du support de moule 14. Le moule 5 est posé sur un système de ressorts et guidé de telle sorte qu'il puisse s'encastrer légèrement dans le support de moule 14 lorsque les poinçons 26 du dispositif de pressage 7 descendent pour tasser le substrat de culture 4 dans le moule 5 dans le but de faire pénétrer dans le lé du matériau souple en bande 22 les couteaux de prédécoupe 140 (figure 7) qui passent à travers les lumières 500a (figure 7) pratiquées dans le fond du moule 5.

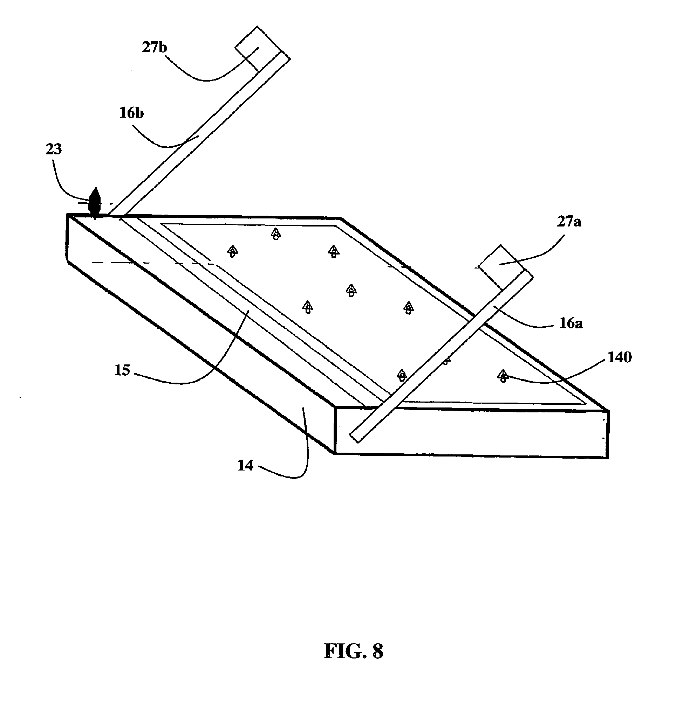

On prévoit un dispositif de pincement 15 (figure 6) du lé du matériau souple en bande 22, constitué par exemple d'une trappe mobile articulée autour d'un axe. Après introduction de l'extrémité du lé du matériau souple en bande 22 par des galets d'entraînement 28, le dispositif de pincement 15 se ferme et presse le lé sur toute sa largeur et le maintient fermement en place pendant les phases de déroulement du lé du matériau souple en bande, d'introduction du substrat de culture 4, et d'assemblage. Il est prévu que le dispositif de pincement 15 s'ouvre au moment de l'extraction du support de culture 1 terminé par des bras d'extraction 16a et 16b (figure 8).

Le chariot de déroulement 17 du matériau souple en bande 22 est positionné au-dessus du support du moule 14. Les galets d'entraînement 28 du lé du matériau souple en bande 22 font descendre celui-ci dans le dispositif de pincement 15 qui se ferme et maintient l'extrémité du matériau souple en bande 22. Le chariot de déroulement 17 se déplace alors en translation vers la droite (figure 6) sur le chemin de roulement supérieur 110, d'un pas correspondant à la largeur du support de moule 14, tout en autorisant le dévidement du matériau souple en bande 22, de sorte que, le lé de matériau souple en bande 22 est déployé au-dessus du moule 5 pour former la première portion 2a d'enveloppe souple (figure 1).

Les moyens de pressage 7 descendent pour plaquer le matériau souple en bande 22 au fond des alvéoles 5a, 5b et 5c du moule 5, puis sont escamotés.

Le chariot de distribution 13 contenant le substrat de culture 4 vient se positionner au-dessus du moule 5, dans la position de distribution.

Le support de moule 14 monte pour plaquer le matériau souple en bande 22 entre la face supérieure du moule 5 et la face inférieure des moyens de distribution 13, ce qui a pour effet de maintenir le matériau souple en bande 22 et de protéger les zones du matériau souple en bande 22 qui seront ultérieurement assemblées pour fermer la poche après son remplissage par le substrat de culture 4.

Comme plus clairement illustré sur la figure 11, les trappes 25 mobiles du réservoir de substrat de culture 19 s'ouvrent, ce qui provoque l'écoulement du substrat de culture 4 contenu dans le réservoir de substrat de culture 19 à travers le dispositif applicateur 20, muni de séparateurs 24 à section triangulaire. Le substrat de culture 4 remplit les poches formées dans les alvéoles 5a, 5b et 5c du moule 5. Les séparateurs 24 guident le substrat de culture 4 vers les poches des alvéoles 5a, 5b et 5c du moule 5, en évitant toute salissure des parties du matériau souple en bande 22 qui entourent les alvéoles et serviront ensuite pour l'assemblage et pour la fermeture du support de culture 1.

Les moyens de pressage 7 descendent à nouveau et les poinçons 26 tassent le substrat de culture 4 dans les poches des alvéoles 5a, 5b et 5c du moule 5. Dans le même temps les moyens de pressage 7 provoquent si cela est désiré la pénétration des couteaux de prédécoupe 140 situés au fond du support de moule 14, qui passent à travers les lumières 500a (figure 7) pratiquées au fond 10b du moule 5 et qui perforent le lé du matériau souple en bande 22 en y provoquant des découpes en croix.

Les moyens de pressage 7 remontent, les trappes mobiles 25 des moyens de distribution 13 se ferment, le support de moule 14 descend, les moyens de distribution 13 repartent vers le poste de rechargement 23 en substrat de culture.

Des doigts de maintien 27a et 27b, situés à l'extrémité des bras d'extraction 16a et 16b (figure 8) articulés sur le support du moule 14, sortent et bloquent le lé du matériau souple en bande 22 sur le support de moule 14.

Le chariot de déroulement 17 est dirigé vers la gauche (figure 6) pour que le lé du matériau souple en bande 22 se replie sur lui-même.

Le chariot de déroulement 17 se déplace en translation avec un pas correspondant à la largeur du support de moule 14, vers la gauche jusqu'à libérer totalement le support de moule 14, laissant un espace suffisant pour extraire le support de culture 1 lorsqu'il sera terminé. Le lé du matériau souple en bande 22, maintenu par les doigts de maintien 27a et 27b (figures 6 et 8), est déployé au-dessus du moule 5 et se replie sur la couche précédente, formant la seconde portion 2b d'enveloppe souple (figure 1). Le matériau souple en bande 22 est maintenu en légère tension par les galets d'entraînement 28 pour faciliter le glissement des têtes de soudage 21 a.

Le chariot de soudage 21, qui porte les têtes de soudage 21 a, vient se positionner au-dessus du moule 5. Le support de moule 14 monte pour assurer une pression des têtes de soudage 21 a sur le matériau souple en bande 22.

Les deux axes de déplacement X et Y (figure 10) du chariot de soudage 21 sont pilotés par un système électronique programmable. Les têtes de soudage 21 a décrivent la ou les trajectoires nécessaires pour assurer la soudure des bords extérieurs du support de culture 1 ainsi que des éventuels cloisonnements. Le système programmable gère aussi l'alimentation en courant des têtes de soudage 21 a qui sont mises en ou hors service aux moments opportuns de la trajectoire.

En fin de soudage du matériau souple en bande 22, le support de culture 1 est totalement fermé ainsi que les cloisonnements s'il y en a. Le support de moule 14 descend pour libérer la pression sur les têtes de soudage 21 a.

Le chariot de soudage 21 repart vers sa position d'attente à droite du dispositif (sur la figure 6).

En avant du dispositif de pincement 15, prenant appui sur le bord supérieur du support de moule 14, on peut prévoir un dispositif de coupe 9. Il peut s'agir par exemple d'un galet rotatif en acier présentant une arête tranchante. La coupe du lé du matériau souple en bande 22 s'obtient en faisant exécuter au galet un mouvement de translation, tout en exerçant une forte pression du galet sur le matériau souple en bande 22.

Le dispositif de coupe 9 sépare le support de culture 1 terminé du lé du matériau souple en bande 22 en provenance du rouleau 60.

Sur les deux côtés du support de moule 14 sont présents les bras d'extraction 16a et 16b, illustrés plus précisément sur la figure 8. Ces bras d'extraction 16a et 16b portent à leurs extrémités deux doigts de maintien 27a et 27b.

Les doigts de maintien 27a et 27b ont un triple rôle : maintenir le lé du matériau souple en bande 22 pour permettre son repli sur lui-même après le garnissage des alvéoles en substrat de culture 4, permettre le maintien d'une légère tension du lé du matériau souple en bande 22 pendant l'opération d'assemblage, et permettre l'extraction du support de culture 1 terminé.

Pour l'étape d'extraction, les bras d'extraction 16a et 16b se relèvent en entraînant le support de culture 1 par les doigts de maintien 27a et 27b qui sont à l'intérieur de la partie du lé du matériau souple en bande 22 replié sur lui-même. Le retrait ultérieur des doigts de maintien 27a et 27b provoque la libération du support de culture 1.

Les bras d'extraction 16a et 16b articulés sur le support de moule 14 se lèvent en décrivant un arc de cercle. Entraîné par les doigts de maintien 27a et 27b, le support de culture 1 est extrait des alvéoles 5a, 5b et 5c du moule 5. Lorsque le support de culture 1 est totalement en dehors du support de moule 14, les doigts de maintien 27a et 27b sont rétractés, le support de culture 1 tombe sur un tapis roulant et est évacué.

Les bras d'extraction 16a et 16b se replient le long du support de moule 14, le chariot de déroulement 17 se positionne au-dessus du moule 5, les galets d'entraînement associés au système enrouleur-dérouleur 18 récupèrent le surplus du lé du matériau souple en bande 22, le cycle de fabrication d'un nouveau support de culture peut reprendre.

Pour faciliter l'extraction du support de culture 1 terminé, les alvéoles 5a, 5b et 5c du moule 5 ont des bords arrondis avec une faible pente. Le moule 5 présente une épaisseur de quelques centimètres seulement. Une telle épaisseur est suffisante pour un support de culture hors sol, dont les longueur et largeur sont généralement de plusieurs dizaines de centimètres, par exemple 50 cm x 100 cm. Une telle configuration évite un plissé trop important du lé du matériau souple en bande 22, plissement qui gênerait l'assemblage.

Pour faciliter le changement de modèle de support de culture à fabriquer, le moule 5 est rapporté de façon interchangeable dans le support de moule 14.

Le chariot de soudage 21 de la figure 6, qui porte les têtes de soudage 21 a, peut être conçu, pour gagner en efficacité et augmenter la productivité, sous forme d'une table à déplacements orthogonaux selon deux axes X et Y illustrés sur la figure 10. Cette disposition permet, par un pilotage électronique adapté, de faire décrire à une ou plusieurs têtes de soudage 21 a une courbe quelconque dans un plan. Il est alors possible d'assembler des supports de culture de formes carrée, rectangulaire, ronde, ovale, avec ou sans séparations internes.

Le chariot de soudage 21 est entraîné par un moteur 70, piloté par un dispositif électronique programmable adapté pour le déplacer selon au moins un axe horizontal.

Dans le mode de réalisation illustré sur la figure 10, le chariot de soudage 21 porte deux autres chariots mobiles 210a et 210b. Ces deux chariots 210a et 210b sont entraînés chacun par un moteur 30a, 30b piloté par un dispositif électronique programmable adapté.

Les chariots mobiles 210a et 210b reçoivent les têtes de soudage 21 a et peuvent se déplacer indépendamment l'un de l'autre selon l'axe vertical. Cette disposition autorise la soudure du matériau souple en bande 22 par plusieurs têtes de soudage 21 a fonctionnant simultanément, les chariots 210a et 210b allant à la rencontre l'un de l'autre. La distance à parcourir est ainsi pratiquement réduite de moitié, le temps de soudage est réduit d'autant.

Les têtes de soudage 21 a sont disposées individuellement sur des supports amovibles à ressorts encliquetés sur les chariots mobiles 210a et 210b. Lorsque des fabrications le nécessitent, certaines des têtes de soudage 21 a peuvent être enlevées ou déplacées.

Egalement, selon un mode de réalisation non illustré de l'invention, une autre façon de mise en oeuvre du procédé à l'aide d'un dispositif de fabrication automatique permet de réaliser des supports de culture avec deux lés de matériaux en bande différents. Ce mode est particulièrement adapté lorsque, pour des raisons techniques ou esthétiques, il est nécessaire d'utiliser deux matériaux souples en bande différents dans leur épaisseur, leur composition, leur couleur.

Le dispositif comprend alors une première bobine de matériau souple textile qui est déroulé du pas correspondant à la largeur du moule. Pour être facilement interchangeable la bobine est logée dans le support de moule.

Les moyens de distribution contiennent, dans le réservoir de substrat de culture, la dose de substrat de culture nécessaire au remplissage des alvéoles du moule.

Si les deux lés du matériau souple en bande sont de compositions différentes, il peut être impossible de les assembler par soudure, l'alternative peut être un assemblage par collage à l'aide d'un adhésif. C'est à cette phase de la réalisation que l'adhésif est déposé par pulvérisation sur les parties du lé du matériau souple en bande apparentes dans le moule. Cette opération d'enduction de l'adhésif peut être combinée à la dépose du substrat de culture par les moyens de distribution lorsque l'applicateur est en contact avec le matériau souple en bande dans le moule. Des injecteurs d'adhésif sont alors intégrés dans l'applicateur. Cette opération n'a pas lieu si l'assemblage est réalisé par soudage.

Le second lé du matériau souple en bande est déroulé du pas correspondant à la largeur du moule, et selon la technologie d'assemblage choisie, soit ce second lé du matériau souple en bande est pressé sur les parties encollées avec, selon la nature de l'adhésif, simplement attente de son refroidissement ou cuisson par chauffage ou encore polymérisation par rayonnement uitraviolet par exemple, ou tout autre moyen technique adapté.

Le second lé du matériau souple en bande peut également être soudé par les têtes de soudage comme expliqué dans le mode de réalisation précédent.

Un dispositif coupe les deux lés du matériau souple en bande. Le support de culture est ainsi terminé garni de substrat de culture, fermé, éventuellement cloisonné. L'extraction du support de culture peut être obtenue par basculement du support de moule, ce qui éjecte le support de culture.

Ce mode de fabrication automatique est particulièrement adapté si l'on veut utiliser deux films textiles différents dans leur épaisseur ou leur composition.

Selon l'invention, une autre façon de mise en oeuvre du procédé consiste, pour fabriquer des supports de culture de forme ou de dimensions très spéciales, à découper les lés du matériau souple en bande préalablement à leur mise en place dans le moule de préformage.

Les morceaux du matériau souple en bande ainsi préparés sont alors mis en place à la main dans le moule et plaqués au fond de l'alvéole par un pressage manuel avec un poinçon de forme adaptée, qui peut éventuellement être associé à une aspiration au fond du moule. Un cache correspondant à la forme et à la taille du moule est posé sur le morceau du matériau souple en bande pour préserver des salissures les zones qui seront collées ou soudées.

Le garnissage en substrat de culture se fait manuellement. Le substrat de culture est déposé sur le cache qui couvre partiellement le moule, et les alvéoles sont remplies. Une raclette passée à la main sur le cache permet d'éliminer le surplus de substrat. Le cache est enlevé. Si l'assemblage final se fait par collage, l'adhésif est déposé manuellement sur les parties réservées à l'aide d'un pistolet à colle, et le second morceau du matériau souple en bande, qui peut être identique ou différent du précédent dans sa composition, son épaisseur ou sa couleur, est plaqué sur le moule. Il faut attendre quelques secondes la prise de l'adhésif et démouler. Dans le cas où les deux morceaux du matériau souple en bande sont de même composition ils peuvent être soudés ou collés.

Ce mode d'obtention manuel est adapté pour des fabrications en petites séries, destinées à former des supports de culture de forme très particulière tels que par exemple : coeur, pétale de fleur, couronne, losange. En effet, pour obtenir de telles formes et éviter un plissage excessif du morceau du matériau souple en bande qui garnit le moule, ce qui rendrait la soudure ou le collage irréalisables avec le morceau du matériau souple en bande de fermeture, il est nécessaire de préparer le premier morceau du matériau souple en bande introduit dans le moule en le découpant selon un gabarit ou en y pratiquant des découpes judicieuses.

La figure 12 illustre une utilisation d'un support de culture fabriqué par un dispositif similaire à celui décrit ci-dessus et selon un procédé similaire à celui décrit ci-dessus.

Le support de culture 1 a été mis en forme dans un moule comprenant quatre alvéoles à contour rectangulaire. Ainsi, le support de culture 1 comprend quatre poches P1, P2, P3 et P4 à contour rectangulaire.

Les moyens de découpage périphérique ont découpé le support de culture selon le pourtour du moule. Trois bandes B12, B23 et B34 de matériau souple en bande font la séparation entre les poches P1, P2, P3 et P4, préalablement remplies de substrat de culture.

Ces trois bandes B12, B23 et B34 permettent que, lors de l'utilisation du support de culture, le support de culture 1 peut être replié sur lui-même en accordéon.

Ce support de culture 1 plié en accordéon peut ensuite être introduit dans un bac de jardinage J.

Un avantage d'une telle utilisation en accordéon est de remplir aisément une jardinière profonde à partir d'un support de culture de faible épaisseur.

La présente invention n'est pas limitée aux modes de réalisation qui ont été explicitement décrits, mais elle en inclut les diverses variantes et généralisations contenues dans le domaine des revendications ci-après.

## Revendications

1. Procédé de fabrication de supports (1) de culture hors sol, comprenant les étapes suivantes :
- prévoir une première portion (2a) d'enveloppe souple (2),
- mettre et tenir en forme la première portion (2a) d'enveloppe souple (2) pour former au moins une poche (3) présentant une face d'ouverture (3a), l'étape de mise en forme de la première portion (2a) d'enveloppe souple (2) étant réalisée avec aspiration et/ou pressage de la première portion (2a) d'enveloppe souple (2) dans un moule (5),
- introduire par la face d'ouverture (3a) un substrat de culture (4) dans la poche (3) tenue par le moule (5),
- fermer la face d'ouverture (3a) de ladite poche (3) avec une seconde portion (2b) d'enveloppe souple (2), pour former un support de culture (1) contenant le substrat de culture (4).

2. Procédé selon la revendication 1, **caractérisé en ce que** les première (2a) et seconde (2b) portions d'enveloppe souple (2) sont réalisées à partir d'un seul lé que l'on replie sur lui-même.

3. Procédé selon la revendication 1, **caractérisé en ce que** les première (2a) et seconde (2b) portions d'enveloppe souple (2) sont réalisées à partir de deux lés distincts.

4. Procédé selon l'une quelconque des revendications 1 à 3, **caractérisé en ce que** l'étape de fermeture est réalisée par soudure, par collage ou par couture.

5. Procédé selon l'une quelconque des revendications 1 à 4, **caractérisé en ce que** l'étape d'introduction du substrat de culture (4) dans la poche (3) est complétée par une étape de compression du substrat de culture (4) dans la poche (3).

6. Procédé selon l'une quelconque des revendications 1 à 5, **caractérisé en ce que** l'étape de fermeture est complétée par une étape de découpage périphérique du support de culture (1).

7. Dispositif pour la fabrication de supports de culture hors sol par la mise en oeuvre d'un procédé selon l'une quelconque des revendications 1 à 6, **caractérisé en ce qu'**il comprend :
- au moins un moule (5) présentant au moins une alvéole (5a, 5b, 5c) avec une paroi périphérique (10a), un fond (10b) et une face supérieure ouverte,
- des moyens de support de moule (14), aptes à recevoir et tenir le moule (5) dans une position de travail prédéterminée,
- des moyens d'acheminement (17) pour fournir une première portion (2a) d'enveloppe souple (2) à proximité de la position de travail prédéterminée,
- des moyens de pincement (15) de l'extrémité de première portion (2a) d'enveloppe souple (2),
- des moyens de mise en forme (6, 7) pour forcer la première portion (2a) d'enveloppe souple (2) dans l'alvéole (5a, 5b, 5c) et former une poche (3) ayant une face d'ouverture (3a),
- des moyens de distribution (13) pour introduire par la face d'ouverture (3a) un substrat de culture (4) dans la poche (3) tenue par l'alvéole (5a, 5b, 5c) du moule (5),
- des moyens de fermeture pour fermer la face d'ouverture (3a) de ladite poche (3) avec une seconde portion (2b) d'enveloppe souple (2), pour former un support de culture (1) contenant le substrat de culture (4).

8. Dispositif selon la revendication 7, **caractérisé en ce que** les moyens de mise en forme comprennent des moyens d'aspiration (6) pour aspirer la première portion (2a) d'enveloppe souple (2) dans l'alvéole (5a, 5b, 5c).

9. Dispositif selon l'une des revendications 7 ou 8, **caractérisé en ce que** les moyens de mise en forme comprennent des moyens de pressage (7) de forme complémentaire de celle de l'alvéole (5a, 5b, 5c) et aptes à presser la première portion (2a) d'enveloppe souple (2) contre la paroi intérieure de l'alvéole (5a, 5b, 5c).

10. Dispositif selon l'une quelconque des revendications 7 à 9, **caractérisé en ce que** les moyens de distribution (13) comprennent :
- une réserve mobile (19), apte à être déplacée entre une position de rechargement et une position de distribution, et comprenant un fond à moyens d'ouverture (25) et apte à s'engager contre la face d'ouverture de la première portion (2a) d'enveloppe souple (2),
- un dispositif applicateur (20) de forme superposable à celle du moule (5).

11. Dispositif selon la revendication 10, **caractérisé en ce que** :
- les moyens de support de moule (14) dépiacent ie moule (5) entre une position inférieure d'attente et une position supérieure de travail,
- la réserve mobile (13) est déplacée horizontalement entre la position de rechargement et la position de distribution,
- en position de distribution, la réserve mobile (13) est en communication avec le moule (5).

12. Dispositif selon l'une des revendications 7 à 11, **caractérisé en ce que** le moule (5) comprend des trottoirs périphériques (10c), et les moyens de fermeture comprennent des moyens d'assemblage des première (2a) et seconde (2b) portions d'enveloppe souple (2).

13. Dispositif selon l'une des revendications 10 ou 11, **caractérisé en ce que** le dispositif applicateur (20) comprend en outre des séparateurs (24).

14. Dispositif selon l'une quelconque des revendications 7 à 13, **caractérisé en ce qu'**il comprend des moyens de découpage périphérique (9) du support de culture (1).

15. Dispositif selon la revendication 14, **caractérisé en ce que** les moyens de découpage périphérique (9) du support de culture (1) sont synchronisés avec les moyens de mise en forme (6, 7).

## Claims

1. Method for manufacturing supports (1) for soilless cultivation, comprising the following steps:
- providing a first portion (2a) of a flexible envelope (2),
- shaping and maintaining the shape of the first portion (2a) of a flexible envelope (2) in order to form at least one pocket (3) having an open face (3a), the step in which the first portion (2a) of a flexible envelope (2) is shaped being effected by suction and/or pressing the first portion (2a) of a flexible envelope (2) into a mold (5),
- introducing a growing medium (4) through the open face (3a) into the pocket (3) held by the mold (5),
- closing the open face (3a) of the said pocket (3) with a second portion (2b) of a flexible envelope (2) in order to form a cultivation support (1) containing the growing medium (4).

2. Method according to claim 1, **characterized in that** the first (2a) and second (2b) portions of a flexible envelope (2) are produced from a single width which is folded on itself.

3. Method according to claim 1, **characterized in that** the first (2a) and second (2b) portions of a flexible envelope (2) are produced from two separate widths.

4. Method according to any of claims 1 to 3, **characterized in that** the closing step is effected by heat-sealing, by adhesive bonding or by stitching.

5. Method according to any of claims 1 to 4, **characterized in that** the step in which the growing medium (4) is introduced into the pocket (3) is supplemented by a step in which the growing medium (4) is compressed in the pocket (3).

6. Method according to any of claims 1 to 5, **characterized in that** the closing step is supplemented by a step in which the periphery of the cultivation support (1) is cut.

7. Device for manufacturing supports for soilless cultivation using a method according to any of claims 1 to 6, **characterized in that** it comprises:
- at least one mold (5) having at least one cell (5a, 5b, 5c) with a peripheral wall (10a), a base (10b) and an open upper face,
- means for supporting the mold (14) which can receive and hold the mold (5) in a predetermined working position,
- conveying means (17) for delivering a first portion (2a) of a flexible envelope (2) in proximity to the predetermined working position,
- means for clamping (15) the end of the first portion (2a) of a flexible envelope (2),
- shaping means (6, 7) for forcing the first portion (2a) of a flexible envelope (2) into the cell (5a, 5b, 5c) and forming a pocket (3) having an open face (3a),
- distribution means (13) for introducing a growing medium (4) through the open face (3a) into the pocket (3) held by the cell (5a, 5b, 5c) of the mold (5),
- closing means for closing the open face (3a) of the said pocket (3) with a second portion (2b) of a flexible envelope (2) in order to form a cultivation support (1) containing the growing medium (4).

8. Device according to claim 7, **characterized in that** the shaping means comprise suction means (6) for sucking the first portion (2a) of the flexible envelope (2) into the cell (5a, 5b, 5c).

9. Device according to one of claims 7 or 8, **characterized in that** the shaping means comprise pressing means (7) with a shape complementing that of the cell (5a, 5b, 5c) and which are capable of pressing the first portion (2a) of the flexible envelope (2) against the inner wall of the cell (5a, 5b, 5c).

10. Device according to any of claims 7 to 9, **characterized in that** the distribution means (13) comprise:
- a movable store (19) which can be displaced between a loading position and a distribution position and comprises a base with opening means (25) and capable of engaging against the open face of the first portion (2a) of the flexible envelope (2),
- an applicator device (20) with a shape that can be superposed on that of the mold (5).

11. Device according to claim 10, **characterized in that**:
- the means for supporting the mold (14) displace the mold (5) between a lower stand-by position and an upper working position,
- the movable store (13) is displaced horizontally between the loading position and the distribution position,
- in the distribution position, the movable store (13) communicates with the mold (5).

12. Device according to one of claims 7 to 11, **characterized in that** the mold (5) comprises peripheral ledges (10c), and the closing means comprise means for assembling the first (2a) and second (2b) portions of the flexible envelope (2).

13. Device according to one of claims 10 or 11, **characterized in that** the applicator device (20) further comprises separators (24).

14. Device according to any one of claims 7 to 13, **characterized in that** it comprises means (9) for cutting the periphery of the cultivation support (1).

15. Device according to claim 14, **characterized in that** the means (9) for cutting the periphery of the cultivation support (1) are synchronized with the shaping means (6, 7).

## Patentansprüche

1. Verfahren zum Herstellen von Trägem (1) erdloser Kulturen, umfassend die folgenden Schritte:
- Bereitstellen eines ersten Teils (2a) einer biegsamen Hülle (2),
- in Form bringen und Halten des ersten Teils (2a) der biegsamen Hülle (2) zur Herstellung wenigstens einer Tasche (3) mit einer Öffnungsseite (3a), wozu der erste Teil (2a) der biegsamen Hülle (2) in eine Form (5) eingesaugt und/oder eingedrückt wird, um diesen ersten Teil (2a) der Hülle (2) in seine Form zu bringen,
- Einfüllen eines Kultursubstrats (4) durch die Öffnungsseite (3a) in die in der Form (5) gehaltene Tasche (3),
- Schließen der Öffnungsseite (3a) der Tasche (3) durch einen zweiten Teil (2b) der biegsamen Hülle (2), wodurch der das Kultursubstrat (4) aufnehmende Träger (1) gebildet wird.

2. Verfahren nach Anspruch 1, **dadurch gekennzeichnet, dass** der erste Teil (2a) und der zweite Teil (2b) der biegsamen Hülle (2) aus einer einzigen Stoffbahn gebildet werden, die auf sich selbst umgelegt wird.

3. Verfahren nach Anspruch 1, **dadurch gekennzeichnet, dass** der erste Teil (2a) und der zweite Teil (2b) der biegsamen Hülle (2) aus zwei getrennten Stoffbahnen gebildet werden.

4. Verfahren nach einem der Ansprüche 1 bis 3, **dadurch gekennzeichnet, dass** das Schließen durch Schweißen, Kleben oder Nähen erfolgt.

5. Verfahren nach einem der Ansprüche 1 bis 4, **dadurch gekennzeichnet, dass** das Einfüllen des Kultursubstrats (4) in die Tasche (3) durch eine Komprimierung des Kultursubstrats (4) in der Tasche (3) ergänzt wird.

6. Verfahren nach einem der Ansprüche 1 bis 5, **dadurch gekennzeichnet, dass** nach dem Schließen der die Kultur aufnehmende Träger (1) auf dem Umfang beschnitten wird.

7. Vorrichtung für die Herstellung von Trägern erdloser Kulturen unter Einsatz eines Verfahrens nach einem der vorhergehenden Ansprüche 1 bis 6, **dadurch gekennzeichnet, dass** diese umfasst:
- wenigstens eine Form (5), die wenigstens eine Zelle (5a, 5b, 5c) mit einer umlaufenden Wand (10a), einem Boden (10b) und einer oberen Öffnungsseite hat,
- Mitteln zum Halten (14) der Form, welche die Form (5) in einer vorbestimmten Arbeitsposition aufnehmen und halten können,
- Fördermitteln (17) zum Zuführen eines ersten Teils (2a) der biegsamen Hülle (2) in der Nähe der vorbestimmten Arbeitsposition,
- Klemmmitteln (15) zum Festklemmen des Endes des ersten Teils (2a) der biegsamen Hülle (2),
- Mitteln (6, 7) zur Formgebung, um den ersten Teil (2a) der biegsamen Hülle (2) in die Zelle (5a, 5b, 5c) zu zwängen und eine Tasche (3) mit einer Öffnungsseite (3a) zu bilden,
- Verteilmitteln (13) zum Einfüllen eines Kultursubstrats (4) durch die Öffnungsseite (3a) in der von der Zelle (5a, 5b, 5c) der Form (5) gehaltenen Tasche (3),
- Schließmitteln zum Schließen der Öffnungsseite (3a) der Tasche (3) mittels eines zweiten Teils (2b) der biegsamen Hülle (2), um einen das Kultursubstrat (4) aufnehmenden Träger (1) zu bilden.

8. Vorrichtung nach Anspruch 7, **dadurch gekennzeichnet, dass** die Mitteln zur Formgebung Ansaugmitteln (6) aufweisen, über die der erste Teil (2a) der biegsamen Hülle (2) in die Zelle (5a, 5b, 5c) gesaugt wird.

9. Vorrichtung nach Anspruch 7 oder 8, **dadurch gekennzeichnet, dass** die Mitteln zur Formgebung Druckmitteln (7) aufweisen, deren Form der Form der Zelle (5a, 5b, 5c) entspricht und die so ausgebildet sind, dass sie den ersten Teil (2a) der biegsamen Hülle (2) gegen die Innenwand der Zelle (5a, 5b, 5c) drücken können.

10. Vorrichtung nach einem der Ansprüche 7 bis 9, **dadurch gekennzeichnet, dass** die Verteilmitteln (13) umfassen:
- einen mobilen Behälter (19), der zwischen einer Befüllposition und einer Ausgabeposition beweglich ist, einen Boden mit Öffnungsmitteln (25) hat und so ausgebildet ist, dass er gegen die Öffnungsseite des ersten Teils (2a) der biegsamen Hülle (2) gebracht werden kann,
- eine Übertragungsvorrichtung (20) mit einer Form, die über diejenige der Form (5) gelegt werden kann.

11. Vorrichtung nach Anspruch 10, **dadurch gekennzeichnet, dass**:
- die Mitteln zum Halten (14) der Form (5) diese zwischen einer unteren Wartestellung und einer oberen Arbeitsstellung bewegen,
- der mobile Behälter (13) horizontal zwischen der Befüllposition und der Ausgabeposition verschiebbar ist,
- der mobile Behälter (13) in der Ausgabeposition in Verbindung mit der Form (5) ist.

12. Vorrichtung nach einem der Ansprüche 7 bis 11, **dadurch gekennzeichnet, dass** die Form (5) Randflächen (10c) hat und dass die Schließmitteln Mitteln zum Verbinden des ersten Teils (2a) mit dem zweiten Teil (2b) der biegsamen Hülle (2) aufweisen.

13. Vorrichtung nach einem der Ansprüche 10 oder 11, **dadurch gekennzeichnet, dass** die Übertragungsvorrichtung (20) außerdem Scheidewände (24) hat.

14. Vorrichtung nach einem der Ansprüche 7 bis 13, **dadurch gekennzeichnet, dass** sie Mitteln (9) zum Umfangsbeschneiden des Kulturträgers (1) hat.

15. Vorrichtung nach Anspruch 14, **dadurch gekennzeichnet, dass** die Mitteln (9) zum Umfangsbeschneiden des Kulturträgers (1) mit den Mitteln (6, 7) zur Formgebung synchronisiert sind.
